# FASCICULE DE BREVET EUROPEEN

(11) **EP 4 212 448 B1**
(45) Date de publication et mention de la délivrance du brevet: **01.05.2024**
(21) Numéro de dépôt: 23174982.1
(22) Date de dépôt: 23.05.2023
(51) Int. Cl.: B65D 8/00, C12H 1/22

(54) **CONTENANT POUR STOCKER ET ÉLEVER DES LIQUIDES**
BEHÄLTER ZUM LAGERN UND HEBEN VON FLÜSSIGKEITEN
CONTAINER FOR STORING AND LIFTING LIQUIDS

(30) Priorité: 12.07.2022 FR 2207181
(43) Date de publication de la demande: 19.07.2023
(73) Titulaire: Champagne Henri Giraud, 51160 Aÿ Champagne (FR)
(72) Inventeur: LE GOLVET, Sébastien, 51160 Aÿ Champagne (FR)
(74) Mandataire: LLR

(56) Documents cités:
- FR-A1- 3 108 335
- US-A- 39 274
- US-A- 2 050 461
- US-B2- 10 781 415

## Description

L'invention concerne un contenant pour élever et stocker des liquides, et en particulier des alcools et liqueurs, comme par exemple le vin ou les boissons alcoolisées pétillantes.

L'élevage du vin est une étape essentielle dans l'élaboration du produit final. Cet élevage a lieu entre la fin de la fermentation alcoolique et/ou malolactique et la mise en bouteille. Cette étape dans la fabrication du vin a principalement pour objet de purifier le vin de ses impuretés par les opérations de soutirage, de faire vieillir le vin et de faire évoluer ses arômes, notamment l'apport de tannins externes, et de préparer les assemblages finaux afin de rendre le vin "consommable" lors de la mise en bouteille.

Cet élevage est réalisé dans des cuves de plus ou moins grande contenance, ou cuves, fabriquées en différents matériaux tels que le béton, l'acier émaillé, l'acier inoxydable, les fibres de verre, le bois et les céramiques et terres cuites.

Les cuves en béton ont une bonne capacité thermique, mais un entretien méticuleux est nécessaire afin d'empêcher la survenue de faux goûts. Les cuves en acier émaillé, et les cuves en acier inoxydable sont les plus employées de nos jours en raison de leur facilité de nettoyage et de leur neutralité chimique. Elles sont généralement équipées de contrôleurs de température. Les cuves en fibre de verre sont de faible coût mais peuvent être à l'origine de faux goûts et ainsi altérer la qualité du vin.

L'élevage en barrique de bois représente pour beaucoup d'amateurs la garantie d'une qualité du vin. En particulier, les tannins issus du bois enrichissent le vin au cours de son élevage afin de donner les saveurs et arômes qui seront caractéristiques d'un domaine et/ou d'un cépage. Toutefois, certains tannins ne sont pas appréciés pour des vins particuliers, car ils confèrent un goût spécifique non recherché lorsqu'ils sont présents en quantité importante dans le vin.

L'élevage en jarres en céramique ou en terre cuite réapparait sur le marché après avoir été abandonné pendant des siècles. On peut notamment citer les récipients divulgués par les documents US2050461 et FR3108335. Ce type de cuves offre une neutralité aromatique au vin, accompagnant son affinage avec délicatesse et élégance et préservant pleinement son identité et le goût de son terroir.

Bien que différents types de matériaux soient utilisables, le bois demeure le plus noble, mais la transmission de tannins demeure problématique.

On connaît de l'art antérieur des contenants en bois comprenant des fonds de fermeture pour fûts de vin en métal et en plastique, par exemple US39274 ou plus récemment US10781415.

Il existe donc un réel besoin de conserver les propriétés des contenants en bois tout en limitant les effets indésirables d'un point de vue organoleptiques.L'invention a donc pour but de pallier ces inconvénients.

L'un des buts de l'invention est de fournir un contenant qui préserve les qualités du bois, tout en limitant les inconvénients.

Un autre but de l'invention est de mettre à profit les propriétés de matériaux neutres.

A cet effet l'invention a pour objet un contenant pour liquide, comprenant :
- un cadre rigide ouvert sensiblement cylindrique constitué d'une pluralité de douelles de bois réunies de manière jointive au moyen d'au moins un cercle qui sert bord à bord les douelles ; ledit cadre définissant une ouverture haute et une ouverture basse, et
- une pièce de fermeture de l'extrémité haute, et une pièce de fermeture de l'extrémité basse, positionnées respectivement au niveau de l'ouverture haute et de l'ouverture basse

la pièce de fermeture de l'extrémité haute et la pièce de fermeture de l'extrémité basse, présentant une surface interne exposée vers l'intérieur dudit contenant
le volume interne du contenant est formé par la partie interne de la pluralité de douelles et les pièces de fermetures de l'extrémité haute et de de l'extrémité basse,
où la surface interne de la pluralité de douelles est préalablement traitée par une source de chaleur,
caractérisé en ce que la pièce de fermeture de l'extrémité haute, et la pièce de fermeture de l'extrémité basse, sont en un matériau céramique.

L'invention repose sur la constatation surprenante faite par les inventeurs que les qualités organoleptiques d'une boisson alcoolisée, en particulier le vin, peut être améliorée significativement lorsque que ladite boissons est stockée et élevée dans un contenant en bois dont les parties de bouchage sont en matériau inerte tel que de la céramique.

En effet, et c'est notamment le cas pour les vins, les boissons acquièrent des propriétés organoleptiques particulières lors qu'elles sont stockées dans des contenants en bois traités, mais ce traitement ne peut être réalisé sur les bouchons. En effet, les couvercles des tonneaux de bois ne peuvent subir de traitement par chauffage sans subir des déformations qui engendreraient un défaut d'étanchéité du tonneau. Aussi, lors de la fabrication de tonneaux destinés à stocker et élever des boissons alcoolisées, il est nécessaire de munir les tonneaux de bois non traité, augmentant ainsi le risque de transfert de composés qui altéreront le goût et les qualités organoleptiques du liquide qu'ils contiennent.

La surface interne de la pluralité de douelles est traité par une source de chaleur, ou chauffe qui peut être réalisée soit par une source de vapeur, soit par une chauffe à l'aide d'un braséro.

Ce traitement à la chaleur ou chauffe organoleptique a pour but d'attribuer à chaque douelle les arômes qu'il est souhaité de donner au vin. Le type d'arôme transmis du fût au vin dépend du degré de chauffe et de la nature de celle-ci.

Lors de cette chauffe, le contenant peut être disposé sur un brasero de sorte que la chauffe atteigne chaque douelle et que celle-ci soit homogène. Une chauffe moyenne dure environ 20 minutes, puis, le tonnelier la retourne pour chauffer l'autre côté de la barrique.

La température et le temps de chauffe jouent un rôle très important. Une minute supplémentaire peut conférer au fût d'autres notes aromatiques.

Outre l'effet sur la réduction de l'eugénol, le fait de fournir des fonds en céramique plus rigides et solides dans le temps que les fonds en bois sur des fûts « classiques » qui viennent à se déformer dans le temps. Les facilités d'entretien et de nettoyage des fonds en céramique est également un avantage notable par rapport aux fonds en bois.

Enfin, l'utilisation de céramiques facilite les projets de décorations des fonds sur les fonds (décorations typiques sur de la porcelaine par exemple), permettant de différencier les fûts selon la tonnellerie ou le domaine d'origine.

Avantageusement, l'invention concerne le contenant susmentionné, où la surface interne de la pièce de fermeture de l'extrémité haute, et de la pièce de fermeture de l'extrémité basse, représente de 20 à 30% de la surface interne totale du contenant, ladite surface totale étant définie par la surface interne de la pluralité de douelles et la surface interne de la pièce de fermeture de l'extrémité haute, et de la pièce de fermeture de l'extrémité basse.

Par « 20 à 30% de la surface interne totale du contenant », on entend dans l'invention une surface de la partie interne des pièces de fermeture qui représente 20, 21, 22, 23, 25, 25, 26, 27, 28, 29 ou 30% de la surface interne du contenant, cette surface interne étant définie par la somme des surfaces des deux pièces de fermeture et des douelles, exposées vers l'intérieur dudit contenant.

De manière plus avantageuse, l'invention concerne le contenant susmentionné, où la pièce de fermeture de l'extrémité haute, et la pièce de fermeture de l'extrémité basse, sont de forme circulaire et présentent une déformation concave vers l'intérieur du contenant lors de leur positionnement sur le cadre rigide.

La déformation concave vers l'intérieur du contenant a pour effet de renforcer la pièce de fermeture notamment lorsque la pièce de fermeture est positionnée à l'extrémité basse du contenant. En effet, sous la pression générée par la masse de liquide contenu dans le contenant, il est nécessaire de proposer une forme adaptée à ladite pression.

De manière plus avantageuse, l'invention concerne le contenant susmentionné, où la déformation concave crée une déformation de 5 à 15 mm par rapport au plan défini par les bords de la pièce de fermeture.

Selon la pression qui sera appliquée sur la pièce de fermeture de l'extrémité basse, il peut être nécessaire d'avoir une déformation concave plus ou moins prononcée. de manière avantageuse, cette déformation est de 0,5 à 1,5 cm par rapport au plan défini par les bords de la pièce de fermeture.

Cela signifie que la déformation peut être de 0,5, 0,6, 0,7, 0,8, 0,9, 1, 1,1, 1, 2, 1,3, 1,4 ou1 ,5 cm par rapport au plan défini par les bords de la pièce de fermeture.

De manière plus avantageuse, l'invention concerne le contenant susmentionné, où la pièce de fermeture de l'extrémité haute, et la pièce de fermeture de l'extrémité basse, sont de forme circulaire, présentent une déformation concave vers l'extérieur du contenant lors de leur positionnement sur le cadre rigide, ladite pièce de fermeture de l'extrémité haute, et la pièce de fermeture de l'extrémité basse présentent dans la partie vers l'intérieur du contenant lors de leur positionnement sur le cadre rigide un ou plusieurs moyens de renfort.

Lorsque la pièce de fermeture est positionnée à l'extrémité basse du contenant de sorte que la partie concave est exposée vers l'extérieur du contenant, la pièce de fermeture sera ainsi renforcée à l'aide de moyens de renfort permettant ainsi de résister à la pression exercée par la masse de liquide contenu dans le contenant.

Le ou les moyens de renforts sont constitués par exemple par des éléments permettant d'augmenter la rigidité de la pièce de fermeture, par exemple une épaisseur de matériau plus importante formant une poudre sur le matériau, ce qui permettra de résister à la pression exercée par la masse de liquide appliquée sur la pièce de fermeture.

De manière plus avantageuse, l'invention concerne le contenant susmentionné, où la déformation concave crée une déformation de 5 à 15 mm par rapport au plan défini par les bords de la pièce de fermeture.

Selon la pression qui sera appliquée sur la pièce de fermeture de l'extrémité basse, il peut être nécessaire d'avoir une déformation concave plus ou moins prononcée. de manière avantageuse, cette déformation est de 0,5 à 1,5 cm par rapport au plan défini par les bords de la pièce de fermeture. Si des moyens de renfort sont présents, la déformation pourra être réduite par rapport à la même pièce de fermeture dépourvue desdits moyens de renfort.

De manière plus avantageuse, l'invention concerne le contenant susmentionné, où les douelles sont obtenues à partir de bois brut.

De manière encore plus avantageuse, l'invention concerne le contenant susmentionné, ledit contenant ayant un volume d'au moins 200 litres.

Le contenant selon l'invention peut être défini comme étant une « barrique bordelaise », dont le volume est de 225 L, et qui présente un bouge élancé et étroit. Le contenant peut également être une « pièce bourguignonne » de 228 L, présentant un bouge ventru et ample.

Des fûts de 300, 350, 400, 450, 500, 600, 700 ou 820 L sont également des fûts selon l'invention. Ces exemples ne sont donnés qu'à titre indicatif et ne sauraient en aucun cas limité la portée de l'invention.

De manière encore plus avantageuse, l'invention concerne le contenant susmentionné, où chaque douelle de la pluralité de douelle présent dans sa partie haute et sa partie basse une saignée, ou jable, permettant le positionnement axial d'une pièce de fermeture.

Afin de solidariser les pièces de fermeture sur le contenant, les douelles sont usinées de sorte à créer une saignée ou jable, dans lequel la pièce de fermeture sera positionnée axialement. Comme chaque douelle de la pluralité de douelles comprend cette saigne, lorsque le contenant est assemblé, le contenant comprendra donc une saignée circulaire. Les dimensions de cette saignée sont telles qu'elle est apte et adaptée à recevoir les bords de la pièce de fermeture, et créer ainsi la fermeture, notamment étanche, de l'extrémité.

De manière encore plus avantageuse, l'invention concerne le contenant susmentionné, où le matériau céramique est de la porcelaine, du grès ou du grès cérame.

La porcelaine est une céramique fine et translucide qui, si elle est produite à partir du kaolin par cuisson à plus de 1 200 °C, prend le nom plus précis de porcelaine dure. Elle est principalement composée d'un mélange de quartz, de feldspath et de kaolin, additionnée d'argile à pipe (ball clay) afin d'augmenter sa plasticité. Le quartz et le feldspath sont réduits en poudre sous l'action de meules en granit, puis moulus dans un cylindre en rotation contenant des galets et de l'eau. Le feldspath permet d'abaisser le point de vitrification de la porcelaine lors de la cuisson.

Le grès ou grès cérame est, en poterie, un matériau céramique caractérisé par une très grande dureté et une excellente résistance aux agressions chimiques ou climatiques. Cette résistance est obtenue par la cuisson à une température supérieure à 1 200 °C d'une pâte généralement composée d'une terre glaise mêlée à des grains de sable fin.

L'avantage du grès par rapport au bois est qu'il ne transmet aucune saveur aux liquides avec lesquels il est en contact.

Le grès est moins poreux et plus dense que la terre cuite car il est cuit à plus haute température. Cela le rend plus adapté à l'élevage des vins blancs qui ont besoin d'être davantage protégés de l'oxygène pour conserver leur éclat et leur fraîcheur.

De manière avantageuse, l'invention concerne le contenant susmentionné, où la pièce de fermeture de l'extrémité basse, ou la pièce de fermeture haute, ou les deux pièces de fermeture basse et haute, sont munies de moyen permettant le chauffage ou le refroidissement de la ou desdites pièce(s) de fermeture.

Dans le cadre de la maturation du vin et de son élevage, lorsque la fermentation malolactique est engagée, il est nécessaire de maintenir le vin à une température comprise entre 18°C et 25°C afin d'éviter d'affecter ladite fermentation, et donc modifier les qualités du vin, notamment ses qualités organoleptiques. Il est préférable de maintenir une température de 20°C, 21 °C ou 22°C. Aussi, il est important de de contrôler la température individuelle de chacun des contenants, plutôt que de contrôler la température globale de la pièce, ce qui est onéreux et moins efficace.

Les moyens de chauffage ou de refroidissement peuvent ainsi être positionnés dans le corps de l'élément de fermeture, par exemple lors du façonnage dudit élément. Par exemple, une pièce en céramique est munie d'un système de réchauffement ou de refroidissement avant sa cuisson, de sorte que l'élément de chauffage ou de refroidissement sera moulé dans la céramique. Il est également possible après moulage de l'élément de fermeture de venir accoler des moyens de chauffage ou de refroidissement sur ledit élément de fermeture.

D'autre moyens sont également possibles, et l'homme du métier saura adapter les meilleurs moyens de chauffage ou de refroidissement. Des exemples de moyen de chauffage sont par exemple, sans être limitatifs, des filaments chauffants, des résistances, ou des tubes permettant la circulation d'eau ou de fluide préalablement chauffé. Des exemples de moyens de refroidissement sont, sans pour autant être limitatif, des tubes permettant la circulation d'eau ou de fluide préalablement refroidi, des tubes de fréon, etc...

L'invention concerne par ailleurs l'utilisation d'un contenant tel que défini ci-dessus, pour réduire la présence d'eugénol dans un liquide stocké dans ledit contenant.

L'invention concerne par ailleurs l'utilisation d'une partie de fermeture d'un contenant en bois, ladite partie de fermeture étant en un matériau en grès ou en porcelaine, pour réduire la présence d'eugénol dans un liquide stocké dans ledit contenant.

Avantageusement, l'invention concerne l'utilisation d'une pièce de fermeture en céramique, pour réduire la présence d'eugénol dans un liquide stocké dans un contenant tel que défini précédemment.

Comme indiqué plus, haut, l'avantage des contenants sen bois est qu'ils permettent de donner au liquide, notamment un vin, des propriétés organoleptiques particulières. Toutefois, certaines saveurs ne sont pas souhaitables ou désirées par le fabricant ou le consommateur, de sorte que les contenants en bois sont traités à la chaleur afin de réduire la teneur notamment en eugénol. Toutefois, les couvercles ou pièces de fermeture ne peuvent subir les traitements à la chaleur sans subir une déformation affectant leur utilisation. Il demeure donc une quantité d'eugénol provenant des couvercles qui est transmis au vin.

Afin de remédier à cet inconvénient, on utilise les des pièces de fermeture en grès ou en céramique ou en porcelaine, afin de remplacer la pièce de bois susceptible de transmettre de l'eugénol par une pièce en un matériau inerte concernant les phénols.

### Brève description des figures

L'invention sera mieux comprise à la lecture de la description qui va suivre donnée uniquement à titre d'exemple et faite en se référant aux dessins annexés dans lesquels :
[Fig. 1a] La figure n°1a est une vue schématique de dessus d'un contenant selon l'invention.
[Fig. 1b] La figure n°1b est une vue schématique d'un contenant selon l'invention en position verticale et en position couchée.
[Fig. 2] La figure n°2 est une autre vue de dessus du contenant selon l'invention dépourvu de son élément de fermeture haut.
[Fig. 3] La figure n°3 est une représentation schématique de profil d'un élément de fermeture.
[Fig. 4] La figure n°4 correspond à la représentation de la figure n°3, ou la double flèche représente la différence entre le fond de la pièce de forme concave et le plan défini par les bords de la pièce de fermeture.
[Fig. 5] La figure n°5 est une représentation schématique de profil d'un élément de fermeture haut, positionné axialement dans la saignée ménagée dans chacune des douelles du contenant.
[Fig. 6] La figure n°6 est une représentation schématique d'un autre mode de réalisation d'un élément de fermeture, selon une vue latérale de dessous.
[Fig. 7] La figure n°7 correspond une vue latérale d'un autre mode de réalisation d'un élément de fermeture.
[Fig. 8] La figure n°8 est une représentation schématique de profil d'un élément de fermeture haut selon un deuxième mode de réalisation, positionné axialement dans la saignée ménagée dans chacune des douelles du contenant.

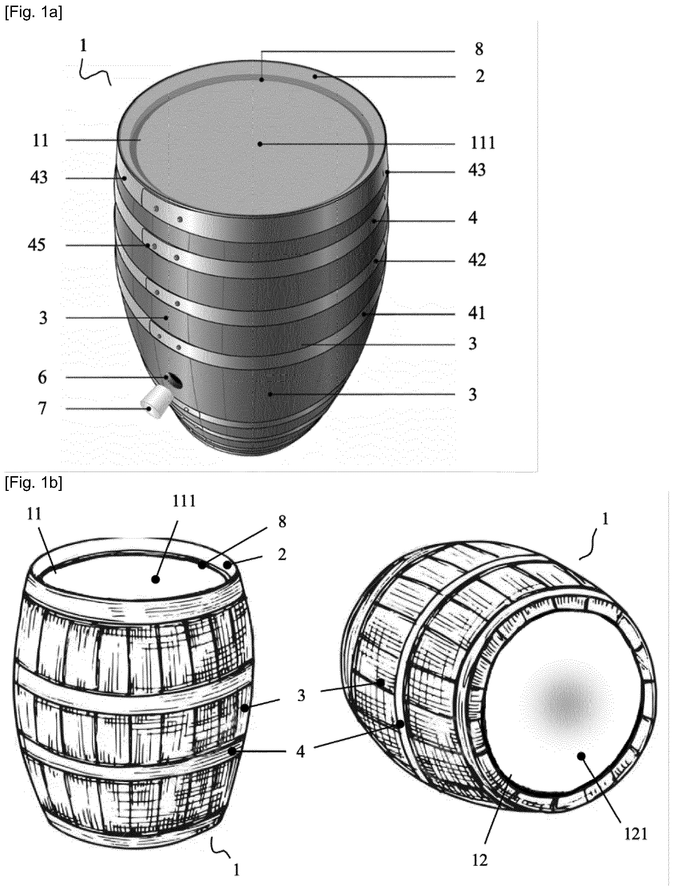

En référence à la figure n°1a, il est représenté un contenant 1 constitué d'une pluralité de douelles 3 formant un cadre rigide 2 essentiellement cylindrique de section circulaire. Les douelles 3 sont unies entre elles pour former le cadre rigide 2 au moyen de plusieurs cercles 4, souvent en acier galvanisé, fixé au moyen de rivets 45.

Un contenant 1 avantageux dans l'invention comprend de 28 à 32 douelles 3. L'une d'entre elle peut être percée afin de former une bonde 6 qui pourra être fermée à l'aide d'un bouchon 7.

Les cercles en acier 4 réunissant les douelles 3 servent également à donner la forme finale du contenant 1, outre les opérations de chauffage décrites ci-après. Ces cercles en aciers peuvent avoir une dénomination spécifique : par exemple le cercle 41 le plus proche de la bonde 6 est appelé le « cercle de bouge » 41. Le cercle plus éloigné 42 est quant à lui appelé le « collet ». Les cercles 43 aux extrémités du contenant 1 sont appelés cercles de tête « cercle de tête » (à l'extrémité du fût) 43.

A l'extrémité haute 11 du contenant 1 selon l'invention est positionné une pièce de fermeture 111 de forme concave. Cette pièce de fermeture 111 est positionnée de manière axiale sur le contenant 1 au sein d'un chanfrein 8 ménagé dans la partie haute et la partie basse de chaque douelle 3. De manière avantageuse, la pièce de fermeture 111 (mais également la pièce de fermeture 121) a une épaisseur de 12 à 18 mm, préférentiellement de 15 mm.

En référence à la figure n°1b, il est représenté
- sur la partie gauche de la figure un contenant 1 constitué d'une pluralité de douelles 3 formant un cadre rigide 2 essentiellement cylindrique de section circulaire en position droite. la description de la figure n°1b s'applique *mutatis mutandis,*
- sur la partie droite, un contenant 1 constitué d'une pluralité de douelles 3 formant un cadre rigide 2 essentiellement cylindrique de section circulaire en position couchée, afin de présenter l'extrémité basse 12. On peut voir la pièce de fermeture 121 est positionnée de manière axiale sur le contenant 1. Sur la pièce de fermeture 121, par partie plus foncée vise à représenter la concavité de la pièce de fermeture 121.

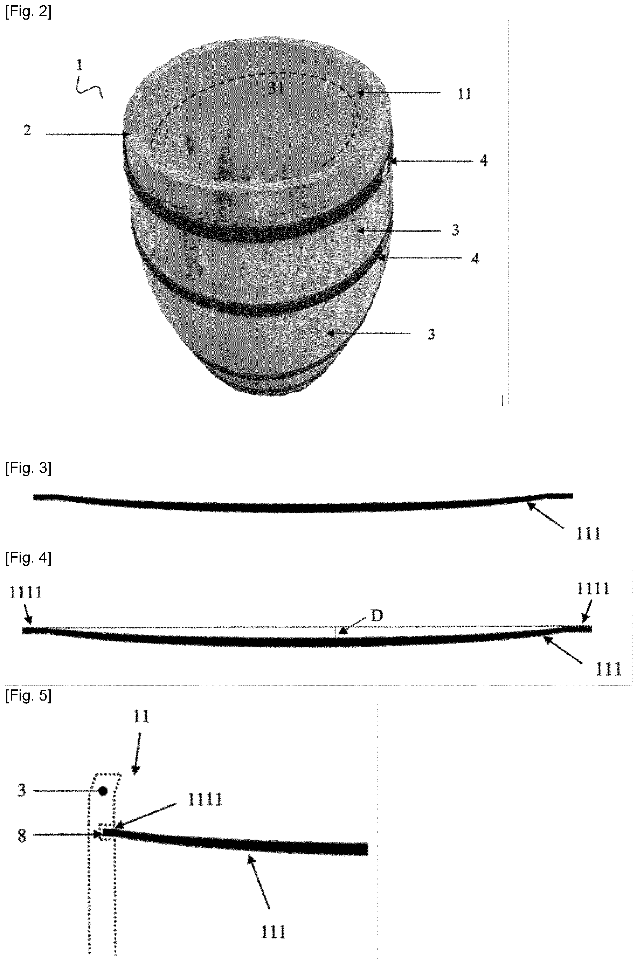

En référence à la figure n°2, il est représenté un contenant 1 selon l'invention qui n'est pas encore finalisé. Le cadre rigide 2 est formé par la pluralité de douelles 3, celles-ci étant unie par des cercles 4. Ici, on contraste que la partie haute de chaque douelle 3 du contenant 1 formant l'extrémité haute 11 n'est pas encore usinée de sorte à créer le chanfrein 8 qui permettra d'insérer axialement la pièce de fermeture qui n'est pas représentée sur la figure.

Du fait de la représentation du contenant 1 sans l'élément de fermeture, il est possible de visualiser la surface interne 31 définie par les douelles.

En référence à la figure n°3, est représentée de manière schématique une pièce de fermeture 111, en position de fermeture de l'extrémité haute 11 du contenant 1. la vue de profil permet de voir la forme concave de cette pièce de fermeture haute 111. On note que cette pièce de fermeture présente une courbure, définissant la partie concave de la pièce.

La figure n°4 est également une représentation schématique de la pièce de fermeture 111, où la profondeur de la pièce concave est représentée par la lettre D, cette profondeur étant définie par rapport au plan indiqué en pointillés qui relie les extrémités 1111 de l'élément de fermeture 111. Les extrémités 1111 sont planes contrairement au reste de la pièce 111 qui est concave.

La figure n°5 est une représentation schématique de l'élément de fermeture haut 111 positionné axialement dans la saignée 8 ou jable ménagé dans la partie haute d'une douelle 3 formant l'une des pièces du contenant 1. L'extrémité 1111 de l'élément de fermeture 111 est la partie qui est insérée et coopère axialement avec dans la saignée 8. la hauteur de la saignée est adaptée à celle de l'extrémité 1111. Aussi, de manière avantageuse, la hauteur de la saignée sera de 12 à 18mm,de préférence de 15 mm.

La forme plane de l'extrémité 1111 coopère donc axialement de manière étroite avec la saignée 8, conférant ainsi une bonne étanchéité. De plus, cela permet de limiter les contraintes appliquées sur la pièce au niveau des extremités1111 lorsqu'elle est soumise à la pression du liquide contenu dans le contenant 1. Du fait de la coopération susmentionnée entre l'extrémité 1111 et la saignée 8, les dimensions seront équivalentes. Par exemple si l'extrémité a une épaisseur de 15mm, la hauteur de la saignée 8 sera aussi de 15 mm.

On notera que les figures 1 à 6 représentent essentiellement la partie haute 11 et l'élément de fermeture 111 du contenant 1. Toutefois, du fait de la symétrie du contenant, lesdites figures pourraient représenter la partie basse 12 et l'élément de fermeture 121 du contenant 1, ledit contenant 1 ayant été retourné à cet effet.

Plus particulièrement aux figures 3 à 6, la représentation de la pièce 111, de son extrémité 1111 et de sa coopération avec la saignée 8 est applicable mutatis mutandis à une pièce 121, son extrémité 1211 et la coopération de cette dernière avec la saignée 8.

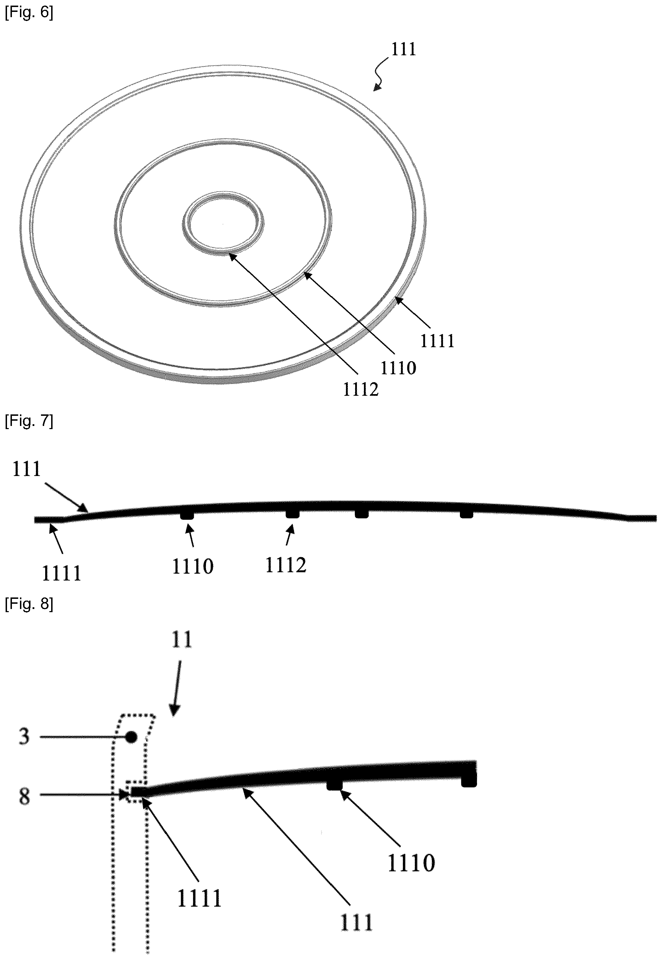

En référence à la figure n°6, il est maintenant décrit un autre mode de réalisation d'une pièce de fermeture 111 selon l'invention.

Dans ce mode de réalisation, la pièce de fermeture 111 possède en ses extrémités une zone plane 1111, et est munie d'éléments de renforts (1110 ; 1112) : un élément de renfort médian circulaire 1110 et un élément de renfort central circulaire 1112. Ces éléments de renfort permettent de rigidifier l'élément de fermeture 111, lui permettant de résister à la pression et à la masse de liquide lorsqu'il est positionné en bas d'un contenant. Les éléments de renfort (1110 ;1112) permettent d'émailler uniformément les deux côtés d'une pièce de fermeture (111).

La figure n°7 est également une représentation schématique de la pièce de fermeture 111 du mode de réalisation décrit à la figure n°6, en position de fermeture de l'extrémité haute 11 du contenant 1. La vue de profil permet de voir la forme concave de cette pièce de fermeture haute 111. On note que cette pièce de fermeture présente une courbure, définissant la partie concave de la pièce. Les éléments de renfort (1110 ;1112) sont également référencés, et se trouvent en contact avec le liquide ou avec l'intérieur du contenant 1. La partie externe (ou ne se trouve pas les éléments de renfort (1110 ;1112), se trouve donc exposée à l'extérieur. cela confère un aspect plus esthétique du contenant lorsqu'il est fermé, il est par ailleurs possible de décorer cette surface lisse pour améliorer l'aspect du contenant ou tout simplement pour l'identifier.

La figure n°8 est une représentation schématique de l'élément de fermeture haut 111 positionné axialement dans la saignée 8 ou jable ménagé dans la partie haute d'une douelle 3 formant l'une des pièces du contenant 1. L'extrémité 1111 de l'élément de fermeture 111 est la partie qui est insérée et coopère axialement avec dans la saignée 8. la hauteur de la saignée est adaptée à celle de l'extrémité 1111.

Les détails concernant le mode de réalisation présenté à la figure n°5 s'appliquent mutatis mutandis à la figure n°8.

### Exemples

### Exemple 1 - fabrication d'un contenant en bois de 228L selon l'invention

Deux parties importantes constituent le fût 1 de 228L :
- Les douelles 3 (en moyenne de 28 à 32 pièces) forment le corps, c'est-à-dire la coque du fût 1 ;
- Les pièces de fonds (111 ; 121).

Les cercles galvanisés 4 permettent de maintenir les douelles 3 entre elles.

Pour passer du merrain à la douelle de coque, voici les opérations à suivre :
1- Ecourtage :
   On donne aux douelles la longueur choisie. Elles doivent être, naturellement, toutes de même longueur.
2- Façonnage :
   Qui comprend quatre opérations : le dolage, le creusage, le fléchage, et le jointage
   - le dolage consiste à donner l'arrondi extérieur qui correspond à la circonférence du fût
   - le creusage : c'est l'intérieur de la douelle qui va être creusée
   - le fléchage, c'est une opération délicate qui donne à la douelle de la flèche ou du pointu. On ôte à partir du centre, une épaisseur de bois progressive sur les flancs de la douelle et qui atteint aux extrémités d'un à deux centimètres, selon le bouge qui sera donné au fût. La douelle se présente ainsi comme deux fuseaux bout à bout. Pendant cette opération, seront éliminées toutes défectuosités, les noeuds, la présence d'aubier.
   - le jointage : ce travail délicat consistera à passer chaque douelle sur la colombe pour régulariser le dessin de chaque joint, tout en respectant le bouge, le gabarit et la pente.
3- Caractéristiques des douelles et première opération de montage : la robe (ou la rose)
   - Sur le dessus, la douelle de bonde sera assez large (de 10 à 11 cm). Compte tenu de son rôle, le choix du tonnelier ira vers un bois de grande qualité mécanique en particulier.
   - Puis les douelles premières, qui prennent place de chaque côté, seront étroites avec une bonne épaisseur.
   - Le tonnelier prend la précaution de mesurer le bois avant le montage en tenant compte de la perte au serrage au feu.
4- Cintrage et chauffe
   Autre phase importante car elle fait intervenir la chaleur sèche du feu de bois. Le fût se présente « en robe »

A l'intérieur on va placer une chaufferette. Le diamètre de la chaufferette doit être de 20 à 35 cm inférieur au diamètre du bout du fût.

Au début de la chauffe le tonnelier place le fût en robe sur un treuil, celui-ci referme ses mâchoires au fur et à mesure que le bois s'échauffe et monte en température. Pour conduire cette opération, le tonnelier maintient une humidité à l'extérieur du fût. Lorsque le serrage se termine, on place au bas du fût un cercle de maintien, le fût est alors retourné et de nouveaux cercles de moule sont placés pendant que le bois est chaud, puis resserrés afin de bien aligner les joints.

La seconde partie de la cuisson constitue la chauffe déterminante pour le fût, appelée bousinage. Celle-ci pénètre le bois sur 5 à 10 mm et développe tous les arômes du fût, en fonction des origines parcellaires d'Argonne. La cuisson douce et lente permet d'imprégner la chauffe dans l'épaisseur du bois.

### 5- Le rognage

Cette opération va permettre de préparer les bouts des douelles pour y placer les fonds. Le tonnelier va simultanément pratiquer :
- le rognage qui va ôter la partie interne des têtes de douelles. Il va alors faire le chanfrein 8, partie inclinée suivant le type des fûts. La partie interne sera égalisée juste au-dessous du chanfrein pour réaliser la parée.
- le jable constitue la rainure qui va recevoir le fond, il mesure 6 mm à 15 mm d'épaisseur

Les pièces de fond (111 ; 121) sont ensuite assemblées.

Les pièces sont rassemblées après que des goujons en inox, aient été placés. On dispose entre chaque joint un brin de jonc ceux-ci permettent une parfaite étanchéité.

Le cercle est alors tracé sur le fond qui est scié en suivant cette ligne. Mais dans le sens de la largeur on mettra 2 mm de plus. En effet, lors du serrage l'ensemble peut se tasser sur la largeur mais jamais sur la longueur.

Puis on pratique le taillage intérieur et extérieur qui donnera le biseau nécessaire autour du fond pour s'encastrer dans le jable. Dans le cadre de notre projet, le pourtour du fond sera droit.

### 7- Le fonçage

On ôte les cercles de bout pour libérer les douelles. On va placer dans le fond du jable une pâte préparée à partir de farine de sarrasin de qualité « biologique », donc sans gluten et d'eau, elle permettra une étanchéité parfaire.

La pièce maîtresse de fond est placée dans le jable bien en face de la douelle de bonde. On bascule le fût et de l'intérieur on pousse le fond dans l'emplacement du jable. Puis pour le second fond, ne pouvant agir de l'intérieur, le tonnelier utilise le tire-fond, pour placer le fond dans son logement.

### 8- Le cerclage

Les premiers cercles utilisés pour la préparation des fûts sont larges et épais. On les nomme « cercle de moule ». Les cercles placés par la suite sont en feuillard galvanisé. Ils sont placés sur le fût et enfoncés à l'aide de la chasse. Le nombre de cercles est variable selon les régions.

On peut donner un nom à chaque cercle. Celui près de la bonde, le plus grand est dénommé « cercle de bouge » 41. Puis le « collet » 42, suivi à quelques centimètres du « cercle de tête » (à l'extrémité du fût) 43.

On recommande aujourd'hui d'utiliser des cercles en fer galvanisé qui sont mieux protégés contre les effets de la rouille. Ces cercles définitifs sont posés suite aux opérations de finition.

### 9- La finition

Le fût est éprouvé à l'eau pour s'assurer de l'absence de défaut. Pour cela on verse 20 à 30 litres d'eau et l'on remue le tonneau sur toute sa surface. Ceci élimine également d'éventuelles particules solides retenues contre les parois. Puis le fût est gonflé à l'air. Sous l'action de la pression et de l'eau, les défauts éventuels laissent apparaître de petites fuites qui pourront être reprises par le tonnelier.

A la suite de ces opérations, le fût est uniquement décerclé en collet et bouge afin de faciliter le ponçage de la coque, puis recerclé avec les cercles définitifs galvanisés. Enfin les cercles de tête sont posés.

### Exemple 2 - mesure des phénols sur différents types de bois servant à la fabrication de contenants.

Dans le cadre de l'invention, l'objectif est de réduire au maximum l'arôme de clou de girofle apporté par l'Eugénol.

Sur un fût de 228L, les fonds de fûts représentent 23 % de la surface de contact totale avec le vin. La qualité des bois de fonds et leur ressuyage (séchage, maturation, affinage naturel des tanins et arômes) a donc un impact non négligeable sur la qualité organoleptique du fût.

### Principe :

### Préparation des échantillons:

Une extraction solide-liquide est réalisée sur 5 g de bois à analyser en présence de 2 standards internes par un mélange de solvants d'extraction.

Les phases organiques sont séchées sur sulfate de magnésium puis concentrées sous courant d'azote.

### Chromatographie :

Elle est effectuée sur un système de chromatographie en phase gazeuse couplé à un détecteur à spectrométrie de masse.

Dans cet exemple, les phénols suivants ont été testés à parti de bois ayant subi des chauffes différentes :
1- un traitement à la vapeur pendant 30 min et au feu de bois pendant 2h,
2- un traitement à la vapeur pendant 1h et au feu de bois pendant 35 min,
3- des bois non traités (Merrain Brut, 36 mois de maturité).

Les résultats de la mesure de l'eugénol des 3 tests sont donnés dans le tableau n° 1 suivant.

**[Table 1]**

| Composé µg/g | « descripteur » | Vapeur 30 min Feu 1h | Vapeur 1h Feu 30 min | Merrain Brut |
|---|---|---|---|---|
| Eugénol | « clou de girofle» | 14,3 | 16,6 | 33,7 |

Les résultats mettent en avant le fait qu'une chauffe du fût et la mise sous vapeur diminuent de façon significative le taux d'eugénol dans le bois, et de ce fait dans les vins qui seront amenés à être en contact avec ces bois composants de futurs fûts.

### Exemple 3 - mesure des phénols sur un type de vin élevé en fût de bois ou en jarre de céramique

Dans cet exemple, des échantillons de vin blanc élevé dans
- un fût de chêne, ou
- une cuve en grès,
ont été soumis à une analyse des composés phénoliques.

### Préparation des échantillons :

Une extraction est réalisée par la technique SPME « Solid Phase Micro Extraction » à l'aide d'une fibre en polyacrylate sur 10 mL de vin en présence d'un standard interne. L'adsorption est effectuée en « Headspace » sous agitation.

### Chromatographie :

Elle est effectuée sur un système de chromatographie en phase gazeuse couplé à un détecteur à spectrométrie de masse

Les résultats sont référencés dans le tableau n°2 suivant :

**[Table 2]**

| **Composé en µg/L** | **Vin - fût de chêne** | **Vin - cuve en grès** |
|---|---|---|
| **eugénol** | **17,3** | **4,1** |

L'échantillon de vin élevé en cuve de grès renferme une teneur en eugénol réduite.

A contrario, le vin élevé en fût de chêne a un taux d'eugénol trop élevé.

Aussi, cet exemple montre que ni un remplacement intégral par une cuve en grès, ni un fût de chêne avec des couvercles en en chêne n'est souhaitable.

Aussi, l'invention permet-elle de combiner les avantages de chaque matériau.

### Exemple 4 :

Un exemple de fond en céramique est fabriqué avec une barbotine de céramique à partir de Vitreo Chine (émail) composé d'argile, de kaolin, de feldspath de quartz d'origine européenne.

Émail céramique utilisé : Mélange minéral, d'oxide et d'opassissant

Zone émaillée : Surface interne et externe de la barrique

Zone non émaillée :
- Bord des fond (nr. 02) nécessaire afin de garantir la géométrie pendant le procédé de cuisson
- La circonférence externe (zone d'encastrement avec la structure bois de la barrique). Ceci afin d'améliorer la zone de contacte pour assemblage avec le corps de la barrique et pour l'éventuel activité de rectification du périmètre extérieur du disque céramique.

Couleur émail : Blanc brillant ou toute autre couleur.

Température de cuisson

Température maximum de cuisson 1220° C par cycle de 18 heures

Procédé de rectification du produit après cuisson :
Afin de garantir le diamètre de 581 mm, le disque de céramique est réalisé de 581+1 mm.

## Revendications

1. Contenant (1) pour liquide, comprenant :
- un cadre rigide ouvert (2) sensiblement cylindrique constitué d'une pluralité de douelles (3) de bois réunies de manière jointive au moyen d'au moins un cercle (4) qui sert bord à bord les douelles ;
ledit cadre définissant une ouverture haute (11) et une ouverture basse (12),
et
- une pièce de fermeture de l'extrémité haute (111), et une pièce de fermeture de l'extrémité basse (121), positionnées respectivement au niveau de l'ouverture haute (11) et de l'ouverture basse (12),
la pièce de fermeture de l'extrémité haute (111), et la pièce de fermeture de l'extrémité basse (121), présentant une surface interne exposée vers l'intérieur dudit contenant le volume interne (5) du contenant (1) est formé par la partie interne (31) de la pluralité de douelles (3) et les pièces de fermetures (111 ; 121),
où la surface interne (31) de la pluralité de douelles (3) est préalablement traité par une source de chaleur,
**caractérisé en ce que** la pièce de fermeture de l'extrémité haute (111), et la pièce de fermeture de l'extrémité basse (121), sont en un matériau céramique.

2. Contenant selon la revendication 1, où la surface interne de la pièce de fermeture de l'extrémité haute (111), et de la pièce de fermeture de l'extrémité basse (121), représente de 20 à 30% de la surface interne totale du contenant, ladite surface totale étant définie par la surface interne de la pluralité de douelles et la surface interne de la pièce de fermeture de l'extrémité haute (111), et de la pièce de fermeture de l'extrémité basse (121).

3. Contenant selon la revendication 1 ou la revendication 2, où la pièce de fermeture de l'extrémité haute (111), et la pièce de fermeture de l'extrémité basse (121), sont de forme circulaire et présentent une déformation concave vers l'intérieur du contenant lors de leur positionnement sur le cadre rigide (2).

4. Contenant selon la revendication 1 ou la revendication 2, où la pièce de fermeture de l'extrémité haute (111), et la pièce de fermeture de l'extrémité basse (121), sont de forme circulaire, présentent une déformation concave vers l'extérieur du contenant lors de leur positionnement sur le cadre rigide (2), et présentent dans la partie vers l'intérieur du contenant lors de leur positionnement sur le cadre rigide (2), un moyen de renfort (1110 ;1112).

5. Contenant selon la revendication 3, où la déformation concave crée une déformation de 5 à 15 mm par rapport au plan défini par les bords de la pièce de fermeture (111,121).

6. Contenant selon l'une quelconque des revendications 1 à 5, où les douelles (3) sont obtenues à partir de bois brut.

7. Contenant selon l'une quelconque des revendications 1 à 6, ledit contenant ayant un volume d'au moins 200 litres.

8. Contenant selon l'une quelconque des revendications 1 à 7, où chaque douelle de la pluralité de douelle présente dans sa partie haute et sa partie basse une saignée (8), ou jable, permettant le positionnement axial d'une pièce de fermeture (111 ; 121).

9. Contenant selon l'une quelconque des revendications 1 à 8, où le matériau céramique est du grès ou du grès cérame.

10. Contenant selon l'une quelconque des revendications 1 à 9, où la pièce de fermeture de l'extrémité basse (121), ou la pièce de fermeture haute (111), ou les deux, sont munies de moyen permettant le chauffage ou le refroidissement de la ou desdites pièce(s) de fermeture.

11. Utilisation d'un contenant tel que défini à l'une quelconque des revendications 1 à 10, pour réduire la présence d'eugénol dans un liquide stocké dans ledit contenant.

12. Utilisation d'une pièce de fermeture en céramique, pour réduire la présence d'eugénol dans un liquide stocké dans un contenant tel que défini dans l'une quelconque des revendications 1 à 10.

## Patentansprüche

1. Behälter (1) für Flüssigkeit, umfassend:
- einen im Wesentlichen zylindrischen offenen starren Rahmen (2), der aus einer Vielzahl von Holzdauben (3) besteht, die mittels mindestens eines Kreises (4) auf verbindende Weise zusammengefügt sind, der die Dauben Kante an Kante bringt;
wobei der Rahmen eine obere Öffnung (11) und eine untere Öffnung (12) definiert, und
- ein Verschlussstück (111) für das obere Ende und ein Verschlussstück (121) für das untere Ende, die an der oberen Öffnung (11) beziehungsweise der unteren Öffnung (12) positioniert sind,
wobei das Verschlussstück (111) für das obere Ende und das Verschlussstück (121) für das untere Ende eine Innenoberfläche aufweisen, die zu dem Inneren des Behälters hin exponiert ist, wobei das Innenvolumen (5) des Behälters (1) durch den Innenteil (31) der Vielzahl von Dauben (3) und die Verschlussstücke (111; 121) ausgebildet ist,
wobei die Innenoberfläche (31) der Vielzahl von Dauben (3) zuvor mit einer Wärmequelle behandelt wird,
**dadurch gekennzeichnet, dass** das Verschlussstück (111) für das obere Ende und das Verschlussstück (121) für das untere Ende aus einem Keramikmaterial sind.

2. Behälter nach Anspruch 1, wobei die Innenoberfläche des Verschlussstücks (111) für das obere Ende und des Verschlussstücks (121) für das untere Ende 20 bis 30 % der gesamten Innenoberfläche des Behälters darstellt, wobei die gesamte Oberfläche durch die Innenoberfläche der Vielzahl von Dauben und die Innenoberfläche des Verschlussstücks (111) für das obere Ende und des Verschlussstücks (121) für das untere Ende definiert ist.

3. Behälter nach Anspruch 1 oder 2, wobei das Verschlussstück (111) für das obere Ende und das Verschlussstück (121) für das untere Ende kreisförmig sind und eine konkave Verformung zu dem Inneren des Behälters hin aufweisen, wenn sie auf dem starren Rahmen (2) positioniert sind.

4. Behälter nach Anspruch 1 oder 2, wobei das Verschlussstück (111) für das obere Ende und das Verschlussstück (121) für das untere Ende kreisförmig sind, eine konkave Verformung zu dem Äußeren des Behälters hin aufweisen, wenn sie auf dem starren Rahmen (2) positioniert sind, und in dem Teil zu dem Inneren des Behälters hin, wenn sie auf dem starren Rahmen (2) positioniert sind, ein Verstärkungsmittel (1110; 1112) aufweisen.

5. Behälter nach Anspruch 3, wobei die konkave Verformung eine Verformung von 5 bis 15 mm in Bezug auf die Ebene erzeugt, die durch die Kanten des Verschlussstücks (111, 121) definiert ist.

6. Behälter nach einem der Ansprüche 1 bis 5, wobei die Dauben (3) aus Rohholz gewonnen werden.

7. Behälter nach einem der Ansprüche 1 bis 6, wobei der Behälter ein Volumen von mindestens 200 Litern besitzt.

8. Behälter nach einem der Ansprüche 1 bis 7, wobei jede Daube der Vielzahl von Dauben in ihrem oberen Teil und ihrem unteren Teil einen Schlitz (8) oder eine Kimme aufweist, die die axiale Positionierung eines Verschlussstücks (111; 121) ermöglicht.

9. Behälter nach einem der Ansprüche 1 bis 8, wobei das Keramikmaterial Steinzeug oder Feinsteinzeug ist.

10. Behälter nach einem der Ansprüche 1 bis 9, wobei das Verschlussstück (121) für das untere Ende oder das Verschlussstück (111) für das obere Ende oder beide mit einem Mittel versehen sind, das das Erwärmen oder das Abkühlen des oder der Verschlussstücke ermöglicht.

11. Verwendung eines Behälters, wie definiert in einem der Ansprüche 1 bis 10, zum Verringern des Vorhandenseins von Eugenol in einer Flüssigkeit, die in dem Behälter gelagert wird.

12. Verwendung eines Verschlussstücks aus Keramik zum Verringern des Vorhandenseins von Eugenol in einer Flüssigkeit, die in einem Behälter, wie definiert in einem der Ansprüche 1 bis 10, gelagert wird

## Claims

1. A liquid container (1), comprising:
- a substantially cylindrical open rigid frame (2) made up of a plurality of wooden staves (3) joined together contiguously by means of at least one hoop (4) which sets the staves edge-to-edge;
said frame defining a top opening (11) and a bottom opening (12), and
- a closing part of the top end (111), and a closing part of the bottom end (121), positioned at the top opening (11) and the bottom opening (12), respectively,
the closing part of the top end (111) and the closing part of the bottom end (121) having an inner surface exposed towards the inside of said container, the inner volume (5) of the container (1) is formed by the inner part (31) of the plurality of staves (3) and the closing parts (111; 121),
wherein the inner surface (31) of the plurality of staves (3) is previously treated by a heat source,
**characterized in that** the closing part of the top end (111), and the closing part of the bottom end (121) are made of a ceramic material.

2. The container according to claim 1, wherein the inner surface of the closing part of the top end (111) and of the closing part of the bottom end (121) makes up 20 to 30 % of the total inner surface of the container, said total surface being defined by the inner surface of the plurality of staves and the inner surface of the closing part of the top end (111) and of the closing part of the bottom end (121).

3. The container according to claim 1 or claim 2, wherein the closing part of the top end (111) and the closing part of the bottom end (121) are circular and have a concave deformation towards the inside of the container when they are positioned on the rigid frame (2).

4. The container according to claim 1 or claim 2, wherein the closing part of the top end (111) and the closing part of the bottom end (121) are circular, have a concave deformation towards the outside of the container when they are positioned on the rigid frame (2), and have, on the part of the container facing the inside when they are positioned on the rigid frame (2), a reinforcing means (1110; 1112).

5. The container according to claim 3, wherein the concave deformation creates a deformation of 5 to 15 mm with respect to the plane defined by the edges of the closing part (111, 121).

6. The container according to any one of claims 1 to 5, wherein the staves (3) are obtained from raw lumber.

7. The container according to any one of claims 1 to 6, wherein said container has a volume of at least 200 liters.

8. The container according to any one of claims 1 to 7, wherein each stave of the plurality of staves has in its top part and its bottom part a groove (8), or head, allowing the axial positioning of a closing part (111; 121).

9. The container according to any one of claims 1 to 8, wherein the ceramic material is sandstone or stoneware.

10. The container according to any one of claims 1 to 9, wherein the closing part of the bottom end (121) or the top closing part (111), or both, are provided with means for heating or cooling said closing part(s).

11. A use of a container as defined in any one of claims 1 to 10, for reducing the presence of eugenol in a liquid stored in said container.

12. A use of a ceramic closing part, for reducing the presence of eugenol in a liquid stored in a container as defined in any one of claims 1 to 10.
